## Europäisches Patentamt

## European Patent Office

## Office européen des brevets

(19)

(11) Publication number: **0 219 472**
**A2**

(12)

# EUROPEAN PATENT APPLICATION

(21) Application number: **86850289.9**

(22) Date of filing: **04.09.86**

(51) Int. Cl.⁴: **C 23 F 13/02**

(30) Priority: **06.09.85 SE 8504148**

(43) Date of publication of application:
**22.04.87 Bulletin 87/17**

(84) Designated Contracting States:
**AT BE CH DE FR GB IT LI LU NL SE**

(71) Applicant: **BAC BERGSÖE ANTI CORROSION INTERNATIONAL AB**
**P.O. Box 73**
**S-261 22 Landskrona (SE)**

(72) Inventor: **Blomdahl, Hendrik d'Otrante**
**Landsevej 14 B**
**DK-2840 Holte (DE)**

(74) Representative: **Lenz, Franz et al**
**AWAPATENT AB Box 5117**
**S-200 71 Malmö (SE)**

(54) **A device for protecting pipes, especially gas and oil pipes, against corrosion.**

(57) Anodes for protecting pipes against corrosion, especially oil pipes which are being uncoiled from a large diameter supply reel and laid on the seabed, each comprise a group of axially spaced apart elements (12, 13, 14) clamped to the pipe, the outermost elements (12, 13) of the group being connected with the pipe (10) by welding in order to maintain the intermediate elements (14) in position, said elements (14) being electrically connected with one another and with said outer elements (12, 13) by means of flexible connectors (21).

FIG.2

**Description**

## A DEVICE FOR PROTECTING PIPES, ESPECIALLY GAS AND OIL PIPES, AGAINST CORROSION

The present invention relates to a device for protecting pipes against corrosion, especially gas and oil pipes which are uncoiled from a supply reel and laid on the seabed, said device comprising anodes of an anode aluminium alloy, an anode zinc alloy or the like which are clamped on the pipe at predetermined intervals and electrically connected therewith.

For many years it has been common practice to protect oil tanks against internal corrosion by installing within the tank sacrificial anodes which, by being connected with the tank, provide a galvanic element via the water collected in the tank. As a result, the tank potential is lowered to such a value that no corrosion can occur. Nowadays, this technique is used also in the offshore industry to protect gas/ oil pipes on the seabed, especially pipes between a main platform and satellite platforms, against external corrosion. In the last-mentioned case, the anodes consist of elongate axially divided sleeves clamped on the pipe and electrically connected therewith. Such anodes are readily attachable to straight pipe-lengths which are welded together as they are being laid, but in modern pipelaying technique of this type where a pipe of considerable length is coiled on a very large drum on board a special ship, the problem arises that laying must be interrupted each time an anode is to be mounted on the pipe because a pipe with mounted anodes cannot be coiled on the drum. Each interruption costs money, and the present invention aims at providing an anode which is so designed that it does not prevent coiling of the pipe on the drum or causes difficulties during uncoiling. To this end, each anode comprises a group of anode elements arranged axially in succession, the two outermost elements being mechanically and electrically connected with the pipe, and the intermediate elements being electrically connected with one another and the outermost elements by means of flexible connectors.

The invention will be described in more detail below, reference being had to the accompanying drawings illustrating embodiments. Fig. 1 is a perspective view of an anode manufactured in accordance with the invention, and Fig. 2 is a lateral view of the anode. Fig. 3 illustrates a portion of two adjacent modified anode elements. Fig. 4 shows the anode from one end.

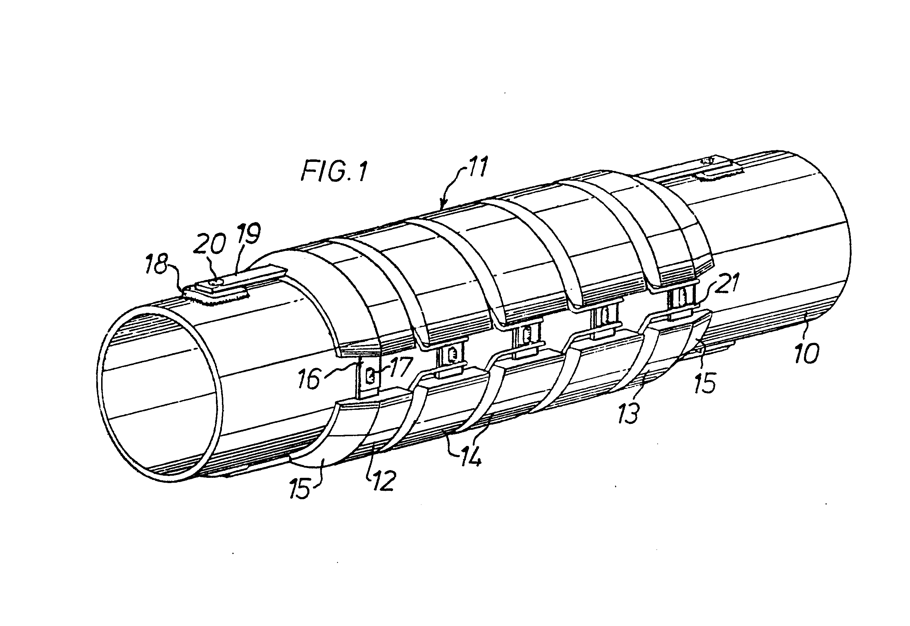

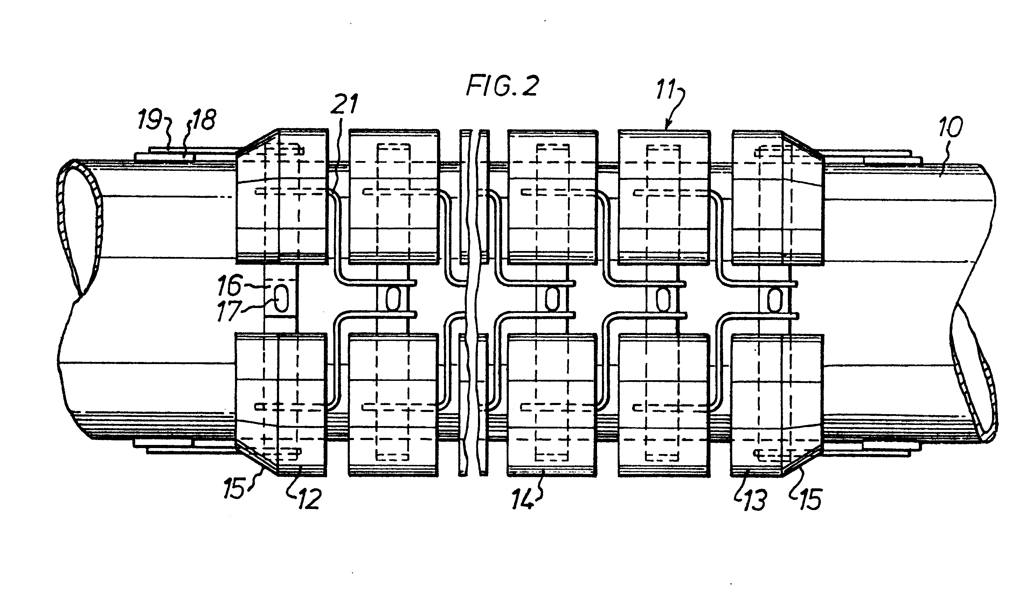

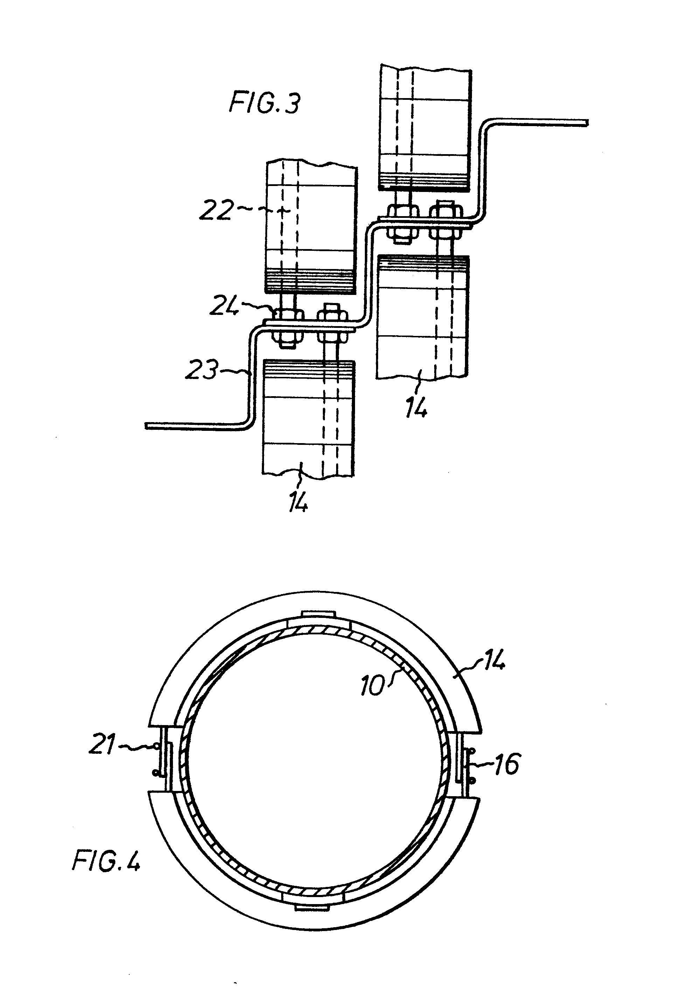

The drawings show a gas/oil pipe 10 which may be of considerable length and is provided at regular intervals with anodes 11 to protect the pipe against corrosion. The pipe 10 is made of steel and usually has an external diameter of between about 50 and 400 mm. Each anode 11 comprises a number of anode elements 12, 13 and 14 which are located in axially spaced apart relation and of which the elements 12, 13 are outer elements and the remaining elements 14 are located therebetween. Each anode element 12, 13 and 14 is made of anode aluminium alloy, anode zinc alloy or the like cast on a core 16 which, according to Figs. 1 and 2, consists of hoop irons, although of course it may have any profile suitable for the purpose of the invention. Each element is made of two almost semicircular parts, from the end faces of which the hoop irons 16 project a distance such that the ends of the hoop iron of one element part can overlap the ends of the hoop iron of the other element part, as will appear from Figs. 1 and 4. Naturally, each anode element may consist of more than two parts. Before the anode alloy is cast over the hoop irons 16, one leg of a Z-shaped wire member 21 is welded to each hoop iron, as will appear from Fig. 2. The Z-shaped members 21 have legs of a length greater than half the width of the anode element, as well as a web interconnecting said legs and forming a right angle with said legs. The web has a length greater than the distance between the point of attachment of the Z-shaped member on the hoop iron 16 and the adjacent end of the element. Because of the length of the legs, the web of the Z-shaped members will lie outside the cast-on alloy and extend parellel thereto, as shown in Fig. 2. Z-shaped members 21 are welded in position adjacent the opposite ends of the anode element parts, and the web of said Z-shaped members extends towards and past the adjacent end. The free end of said Z-shaped members is directed perpendicularly away from the element. Also connected with the hoop irons 16 of the outer element parts is an axial hoop iron 19 projecting from the end of the outer elements 12, 13 which is intended to be facing outwardly after the anode elements have been mounted on the pipe. The hoop irons 19 can be connected with the hoop irons 16 by welding before the anode material is cast on. At the location of its connection with the hoop iron 19, the hoop iron 16 preferably is exposed by means of a recess in the inner side of the anode element parts, which means that the hoop irons 19 can be welded to the hoop irons 16 also after the anode material has been cast on.

To amount the anode according to the invention on a pipe 10, one proceeds as follows. First, two plates 18 are welded diametrically opposite one another on the pipe 10, and at an axial distance therefrom depending on the length of the anode concerned, a further pair of plates 18 are welded. After that, the first anode element 12 is secured by being clamped around the pipe 10 by means of a flexible member, such as a chain, whereupon the projecting hoop iron ends are welded together at 17. An insulating layer is preferably mounted between the inner side of the element parts and the pipe 10. This layer may be in the form of a strip placed around the pipe at the location of the element, or a foil laid around the pipe over the entire length of the anode element. The insulating layer may also be the coating which is externally applied to the pipes after their manufacture. After the ends of the hoop irons 16 have been welded together, the clamping member is removed and the axially projecting hoop iron 19 of the elements is welded to its associated plate 18. Then the next anode element 14 is mounted in the same manner, but during welding of the ends of the hoop irons 16 also the free end of the Z-shaped connector 21 of the outer element 12 is welded in the manner illustrated in Figs. 1 and 2. The element 14 is disposed at a predetermined axial distance from the first element 12, and in the same manner the desired number of anode elements 14 are mounted after the first-mentioned element at the same intervals, and finally the second outer element 13 is welded in the same manner as the first outer element 12. This means that the outer elements 12, 13 connected with the pipe 10 will axially hold the intermediate anode elements 14 in position. Due to the flexible interconnection of the anode elements, the pipe 10 can be bent as desired when coiled up on the supply reel. By the hoop irons 19, 16 and the connectors 21, a reliable electric communication is established between the pipe 10 and all of the elements 12, 13 and 14.

The anode elements may also be interconnected in the manner shown in Fig. 3, in which case the hoop irons 16 have been replaced by supporting rods 22 projecting from the end faces of the anode element parts and provided with threaded ends. Upon mounting of the anode elements 14 according to Fig. 3, use is made of angle members 23 having two parallel flanges and a web perpendicular to and connecting said flanges.

Throughholes are provided in the flanges. Upon mounting of the anode element parts 14 in accordance with Fig. 3, use is made of an element part in which the supporting rod 22 is offset in one direction from the centre of the part, and another element part in which the supporting rod is offset in the other direction from the centre of the element, such that the rods will lie side by side in the space between the anode element parts, and since the throughholes of the angle members 23 are spaced apart a corresponding distance, they can be pushed onto the projecting rod ends and anchored by means of nuts 24. The nuts preferably are secured by welding. According to Figs. 1 and 2, the spaces between the anode element parts lie axially opposite one another, but because of the exterior angle members 23 in the embodiment according to Fig. 3, the spaces will be offset in accordance with the web length of said members 23. Naturally, the length of the web of the Z-shaped members 21 illustrated in Figs. 1 and 2 may be changed in relation to the length shown in the drawing so that also in this case the spaces between the element parts are offset in the peripheral direction relative to one another, whereby the risk of damaging the anodes during coiling or uncoiling is further reduced.

As will appear from the above, the anode according to the invention makes it possible to conveniently coil up a pipe provided with anodes on a large diameter supply reel since the anodes permit bending of the pipe to the required extent. Furthermore, the anodes are not in the way when the pipe is being laid. To allow the anodes to pass guide means etc. during coiling and laying of the pipe, the outwardly facing edges of the outermost anode elements preferably are bevelled, as shown at 15.

Although the anode according to the invention has been developed especially for pipelaying operations in the manner described above, it may, of course, also be used in other contexts where pipes are desired which are more flexible than a conventional pipe with a long and rigid anode.

## Claims

1. A device for protecting pipes (10) against corrosion, especially gas and oil pipes which are uncoiled from a supply reel and laid on the seabed, said device comprising anodes (11) of an anode aluminium alloy, an anode zinc alloy or the like which are clamped on the pipe (10) at predetermined intervals and electrically connected therewith, **characterised** in that each anode (11) comprises a group of anode elements (12, 13, 14) arranged axially in succession, the two outermost elements (12, 13) being mechanically and electrically connected with the pipe (10), and the intermediate elements (14) being electrically connected with one another and the outermost elements (12, 13) by means of flexible connectors (21).

2. A device as claimed in claim 1, in which each anode element (12, 13, 14) comprises at least two arcuate pieces of anode material, each piece being cast over a supporting member (16, 22) projecting peripherally from the ends of said anode piece to enable clamping of the anode pieces around the pipe (10), **characterised** in that one end of at least one connector (21, 23) is electrically connected with the supporting member (16, 22) of each anode piece, the opposite end of said connector (21, 23) being electrically connected with the supporting member (16, 22) of an adjacent anode piece.

3. A device as claimed in claim 2, **characterised** in that said connector (21) is Z-shaped and connected at one end with the supporting member (16) of the anode pieces at a distance from the ends of said supporting member, the other end being connected with the projecting end portion of the supporting member (16) of the adjacent anode piece adjacent the end of said connector (16).

4. A device as claimed in claim 3, **characterised** in that said anode pieces are connected by means of connectors (21) with such a web length that the spaces between the anode pieces are peripherally offset relative to one another.

5. A device as claimed in claim 2, in which said anode pieces have projecting rod-shaped supporting members (22) with a threaded end for anchoring said anode pieces around the pipe (10) by bolting, **characterised** in that said connector (23) is Z-shaped and has, in its opposite flanges, holes corresponding to the supporting members (22) and is connected with the supporting members (22) of adjacent anode pieces by means of nuts (24) screwed onto said supporting members, adjacent anode pieces being peripherally offset in accordance with the length of the web of said connectors.

6. A device as claimed in any one of the preceding claims, **characterised** in that the connector (16) of the outer elements is exposed at a location between the ends of said anode pieces where it is connected with a metallic anchoring member (19) extending axially outwardly from the outer element and welded to a holding plate (18) welded to the pipe.

7. A device as claimed in any one of the preceding claims, **characterised** in that the outwardly facing edges (15) of the anode pieces of the outer elements are bevelled to allow the anode to pass pipe guide means during coiling and laying of the pipe (10).

FIG.1

FIG.2

FIG.3

FIG.4